# EUROPÄISCHE PATENTSCHRIFT

(11) **EP 1 267 277 B1**
(45) Veröffentlichungstag und Bekanntmachung des Hinweises auf die Patenterteilung: **22.09.2004**
(21) Anmeldenummer: 01114215.5
(22) Anmeldetag: 12.06.2001
(51) Int. Cl.: G06F 17/30, G06F 11/14

(54) **Verfahren, System und Computerprogrammprodukt zum Ändern der Datenstruktur mit der in einem Computersystem ein Anwendungsprogramm auf Datenbanksysteme zugreift**
Method, system and computer program product for modifying the data structure used by an application program to access database systems in a computer system
Méthode, système et produit logiciel de modification de la structure des données utilisées par une application pour accéder à des systèmes de bases de données dans un système informatique

(43) Veröffentlichungstag der Anmeldung: 18.12.2002
(73) Patentinhaber: SAP Aktiengesellschaft, 69190 Walldorf (DE)
(72) Erfinder: Aponiewicz, Joanne, Ridley Park, PA 19078 (US); Becker, Wolfgang, 67069 Ludwigshafen (DE); Demuth, Michael, 69231 Rauenberg (DE); Pitterling, Peter, 75031 Eppingen (DE); Schmidt, Siegfried, Dr., 69168 Wiesloch (DE)

(56) Entgegenhaltungen:
- US-A- 5 625 815
- WANG J ET AL: "A technique for upgrading database machines online" ADVANCES IN INFORMATION SYSTEMS. FIRST INTERNATIONAL CONFERENCE, ADVIS 2000. PROCEEDINGS (LECTURE NOTES IN COMPUTER SCIENCE VOL.1909), ADVANCES IN INFORMATION SYSTEMS. FIRST INTERNATIONAL CONFERENCE, ADVIS 2000, IZMIR, TURKEY, 25-27 OCT. 2000, Seiten 82-91, XP002200516 2000, Berlin, Germany, Springer Verlag, Germany ISBN: 3-540-41184-4

## Beschreibung

### Gebiet der Erfindung

Im allgemeinen betrifft die vorliegende Erfindung Computersysteme mit Anwendungsprogramm und Datenbank, und im besonderen betrifft die Erfindung das Ändern der Datenstrukturen in diesen Systemen durch Aufrüsten.

### Hintergrund der Erfindung

Relationale Datenbanken werden zum Speichern von Daten aus Anwendungsprogrammen verwendet. Daten werden in Tabellen strukturiert. Wie im folgenden verwendet, enthält ein Datenbanksystem ein Datenbankverwaltungssystem ("database management system").

Technologischer Fortschritt und sich ändernde Anforderungen von Kunden erfordern von Zeit zu Zeit die Änderung der Datenstrukturen im Datenbanksystem. Als Beispiel sei an dieser Stelle stellvertretend nur das Erweitern bestehender Tabellen und das Übersetzen von Texten in andere Sprachen genannt.

Die Akzeptanz der Anwendungsprogramme ist abhängig u.a. von deren Verfügbarkeit: für viele Programme wird eine 24stündige Verfügbarkeit an 365 Tagen im Jahr gefordert. Während der Änderung kommt es zu Einschränkungen in der Kommunikation zwischen dem Anwendungsprogramm und dem Datenbanksystem; in vielen Fällen muß die Kommunikation vollständig unterbrochen werden.

Stillstandszeiten sind unerwünscht aber technisch bedingt, da eine Änderung der Datenstruktur nicht gleichzeitig mit dem Schreiben oder Verändern der Dateninhalte erfolgen kann.

Die Größen der Tabellen können im Bereich von mehreren Gigabyte liegen und können Stillstandszeiten von mehreren Stunden erfordern.

Es besteht die Aufgabe, Verfahren, System und Computerprogramme zum Ändern der Datenstruktur bereitzustellen, die eine Verkürzung der Stillstandszeiten ermöglichen.

Die folgenden Druckschriften beschreiben Änderungen in Datenbanksystemen: US 5,625,815, US 6,141,664, US 6,122,630, US 6,205,451, US 5,893,119, DE 198 03 697 A1, sowie DE 197 34 413.

### Zusammenfassung der Erfindung

Die vorliegende Erfindung stellt ein Verfahren bereit zum Übertragen von Daten aus einem ersten Datenbanksystem (Originalsystem) in ein zweites Datenbanksystem (Upgradesystem) mit veränderter Struktur ("upgrade", Aufrüsten).

Ein Anwendungsprogramm kommuniziert vor Ausführung des Verfahrens mit dem ersten Datenbanksystem und kann nach Ausführung des Verfahrens mit dem zweiten Datenbanksystem kommunizieren. Da nach Ausführung die Daten in beiden Datenbanksystemen inhaltlich identisch sind, kann bei Problemen jederzeit auf das erste Datenbanksystem zurückgegriffen werden ("back up"). Der bei Strukturänderungen notwendige Stillstand der Anwendung erfolgt nach Ausführung des Verfahrens, wobei beim erfindungsgemäßen Verfahren selbst keine Stillstandszeiten ("down time") mehr erforderlich sind.

Gemäß Anspruch 1 betrifft die Erfindung ein Verfahren zum Ändern der Datenstruktur, mit der in einem Computersystem ein Anwendungsprogramm auf Datenbanksysteme zugreift. Das Verfahren ist durch die folgenden computer-implementierten Verfahrensschritte gekennzeichnet:
Kommunizieren des Anwendungsprogramms mit einem ersten Datenbanksystem zum Speichern von Einträgen in einer Quelltabelle, die eine erste Datenstruktur aufweist;
Anlegen einer Zieltabelle in dem ersten Datenbanksystem, wobei die Zieltabelle eine zweite Datenstruktur aufweist, die von der ersten Datenstruktur verschieden ist;
Aufzeichnen der Änderungsart derjenigen Einträge der Quelltabelle, die beim Kommunizieren des Anwendungsprogramms mit der Quelltabelle geändert werden;
Kopieren der Zieltabelle auf eine Kopie der Zieltabelle in einem zweiten Datenbanksystem, wobei die zweite Datenstruktur in der Kopie der Zieltabelle beibehalten wird;
Kopieren der Quelltabelle mit ihren Einträgen auf eine Kopie der Quelltabelle im zweiten Datenbanksystem, wobei die erste Datenstruktur in der Kopie der Quelltabelle beibehalten wird;
Konvertieren der Einträge der Kopie der Quelltabelle von der ersten Datenstruktur in die zweite Datenstruktur, wobei die konvertierten Einträge in der Kopie der Zieltabelle gespeichert werden; und
Anpassen der geänderten Einträge der Quelltabelle an die Kopie der Quelltabelle, wobei die geänderten Einträge aus der Quelltabelle als geänderte Einträge in die Kopie der Quelltabelle kopiert werden.
Wahlweise sind das kontinuierliche Ausführen des Schritts Kommunizieren und die zyklische Wiederholung der Schritte Konvertieren und Anpassen, sowie der Abbruch der Wiederholung unter zumindest einer der folgenden Bedingungen: (a) die Zahl der geänderten Einträge in der Quelltabelle hat eine vorgegebene Anzahl unterschritten; (b) die zur Ausführung der Schritte Konvertieren und Anpassen benötigte Zeit unterschreitet einen vorgegebenen Grenzwert. Wahlweise ist auch das Einbeziehen der Schritte Kopieren in die Wiederholung. Wahlweise ist der zusätzliche Schritt Festhalten der Kopie der Zieltabelle, ausgeführt im Anschluß an den Schritt Konvertieren. Wahlweise ist, daß im Schritt Aufzeichnen eine Aufzeichnung im erstem Datenbanksystem erzeugt wird.

Gemäß Anspruch 7 betrifft die Erfindung ein Computersystem zum Ändern der Datenstruktur mit der in einem Computersystem ein Anwendungsprogramm auf Datenbanksysteme zugreift. Das Computersystem ist gekennzeichnet durch:
einen ersten Datenpfad als Mittel zum Kommunizieren des Anwendungsprogramms mit einem ersten Datenbanksystem zum Speichern von Einträgen in einer Quelltabelle, die eine erste Datenstruktur aufweist;
einen Tabellenanleger als Mittel zum Anlegen einer Zieltabelle in dem ersten Datenbanksystem, wobei die Zieltabelle eine zweite Datenstruktur aufweist, die von der ersten Datenstruktur verschieden ist;
einen Änderungserkenner sowie zweiten und dritten Datenpfaden als Mittel zum Aufzeichnen der Änderungsart derjenigen Einträge der Quelltabelle, die beim Kommunizieren der Anwendung mit der Quelltabelle geändert werden;
einen vierten Datenpfad als Mittel zum Kopieren der Zieltabelle auf eine Kopie der Zieltabelle in dem zweiten Datenbanksystem, wobei die zweite Datenstruktur in der Kopie der Zieltabelle beibehalten wird;
einen fünften Datenpfad als Mittel zum Kopieren der Quelltabelle mit ihren Einträgen auf eine Kopie der Quelltabelle in einem zweiten Datenbanksystem, wobei die erste Datenstruktur in der Kopie der Quelltabelle beibehalten wird;
einen Konverter sowie sechste und siebente Datenpfade als Mittel zum Konvertieren der Einträge der Kopie der Quelltabelle von der ersten Datenstruktur in die zweite Datenstruktur, wobei die konvertierten Einträge in der Kopie der Zieltabelle gespeichert werden; und
einen Anpasser sowie achte und neunte Datenpfade als Mittel zum Anpassen der geänderten Einträge der Quelltabelle an die Kopie der Quelltabelle, wobei die geänderten Einträge aus der Quelltabelle als geänderte Einträge in die Kopie der Quelltabelle kopiert werden.

Gemäß Anspruch 8 betrifft die Erfindung ein Computerprogrammprodukt zum Ändern der Datenstruktur, mit der in einem Computersystem ein Anwendungsprogramm auf Datenbanksysteme zugreift. Das Computerprogrammprodukt enthält Prozessorbefehle und ist gekennzeichnet durch:
Prozessorbefehle zum Kommunizieren des Anwendungsprogramms mit einem ersten Datenbanksystem zum Speichern von Einträgen in einer Quelltabelle, die eine erste Datenstruktur aufweist;
Prozessorbefehle zum Anlegen einer Zieltabelle in dem ersten Datenbanksystem, wobei die Zieltabelle eine zweite Datenstruktur aufweist, die von der ersten Datenstruktur verschieden ist;
Prozessorbefehle zum Aufzeichnen der Änderungsart derjenigen Einträge der Quelltabelle, die beim Kommunizieren des Anwendungsprogramms mit der Quelltabelle geändert werden;
Prozessorbefehle zum Kopieren der Zieltabelle auf eine Kopie der Zieltabelle in dem zweiten Datenbanksystem, wobei die zweite Datenstruktur in der Kopie der Zieltabelle beibehalten wird;
Prozessorbefehle zum Kopieren der Quelltabelle mit ihren Einträgen auf eine Kopie der Quelltabelle in einem zweiten Datenbanksystem, wobei die erste Datenstruktur in der Kopie der Quelltabelle beibehalten wird;
Prozessorbefehle zum Konvertieren der Einträge der Kopie der Quelltabelle von der ersten Datenstruktur in die zweite Datenstruktur, wobei die konvertierten Einträge in der Kopie der Zieltabelle gespeichert werden; und
Prozessorbefehle zum Anpassen der geänderten Einträge der Quelltabelle an die Kopie der Quelltabelle, wobei die geänderten Einträge aus der Quelltabelle als geänderte Einträge in die Kopie der Quelltabelle kopiert werden.

Gemäß Anspruch 9 betrifft die Erfindung ein Verfahren zum Ändern der Datenstruktur, mit der in einem Computersystem ein Anwendungsprogramm auf Datenbanksysteme zugreift. Das Verfahren ist durch die folgenden Verfahrensschritte gekennzeichnet:
während das Anwendungsprogramm mit einem ersten Datenbanksystem zum Speichern von Einträgen in einer Quelltabelle, die eine erste Datenstruktur aufweist, kommuniziert, Aufzeichnen der Änderungsart derjenigen Einträge, die geändert werden;
Kopieren der Quelltabelle mit ihren Einträgen auf eine Kopie der Quelltabelle in dem zweiten Datenbanksystem, wobei die erste Datenstruktur in der Kopie der Quelltabelle beibehalten wird;
Erzeugen einer Target-Tabelle in dem zweiten Datenbanksystem, wobei die Target-Tabelle eine zweite Datenstruktur aufweist, die von der ersten Datenstruktur verschieden ist;
Konvertieren der Einträge der Kopie der Quelltabelle von der ersten Datenstruktur in die zweite Datenstruktur, wobei die konvertierten Einträge in der Target-Tabelle gespeichert werden;
Anpassen der geänderten Einträge der Quelltabelle an die Kopie der Quelltabelle, wobei die geänderten Einträge aus der Quelltabelle als geänderte Einträge in die Kopie der Quelltabelle kopiert werden; und
Wiederholen der Schritte Konvertieren und Anpassen.

Unteransprüche betreffen bevorzugte Ausführungen der Erfindung. Wahlweise werden Computersystem und Computerprogrammprodukt so betrieben wie oben beschrieben: kontinuierliches Ausführen des Kommunizierens, zyklische Wiederholung des Konvertierens und Anpassens, Abbruch der Wiederholung unter zumindest einer der Bedingungen: (a) und (b), Einbeziehen des Kopierens in die Wiederholung, Festhalten der Kopie der Zieltabelle, sowie Aufzeichnung im erstem Datenbanksystem

### Kurzbeschreibung der Zeichnungen

- FIG. 1: zeigt ein vereinfachtes Blockschaltbild eines erfindungsgemäßen Computer-Netz-Systems;
- FIG. 2: zeigt ein vereinfachtes Flußdiagramm eines erfindungsgemäßen Verfahrens in einem ersten Ausführungsbeispiel;
- FIG. 3: zeigt ein vereinfachtes Blockdiagramm der Funktionsgruppen, die das Verfahren nach FIG. 2 ausführen;
- FIGS. 4-10: zeigen vereinfachte Blockdiagramme der Funktionsgruppen für jeden Verfahrensschritt; und
- FIG. 11: zeigt das vereinfachte Flußdiagramm des erfindungsgemäßen Verfahrens in einem zweiten Ausführungsbeispiel.

### Ausführliche Beschreibung der Erfindung

In der folgenden Beschreibung werden Fachbegriffe aus der englischen Sprache durch Anführungszeichen " " und Inhaltsbeispiele durch Apostrophe '' gekennzeichnet. Das Wort "bevorzugterweise" als Hinweis für vorteilhafte aber nicht notwendige Ausführungsformen wird mit "bvzw" abgekürzt. Eine Zusammenstellung von Bezugszeichen und Elementen der Zeichnungen findet sich vor den Ansprüchen.

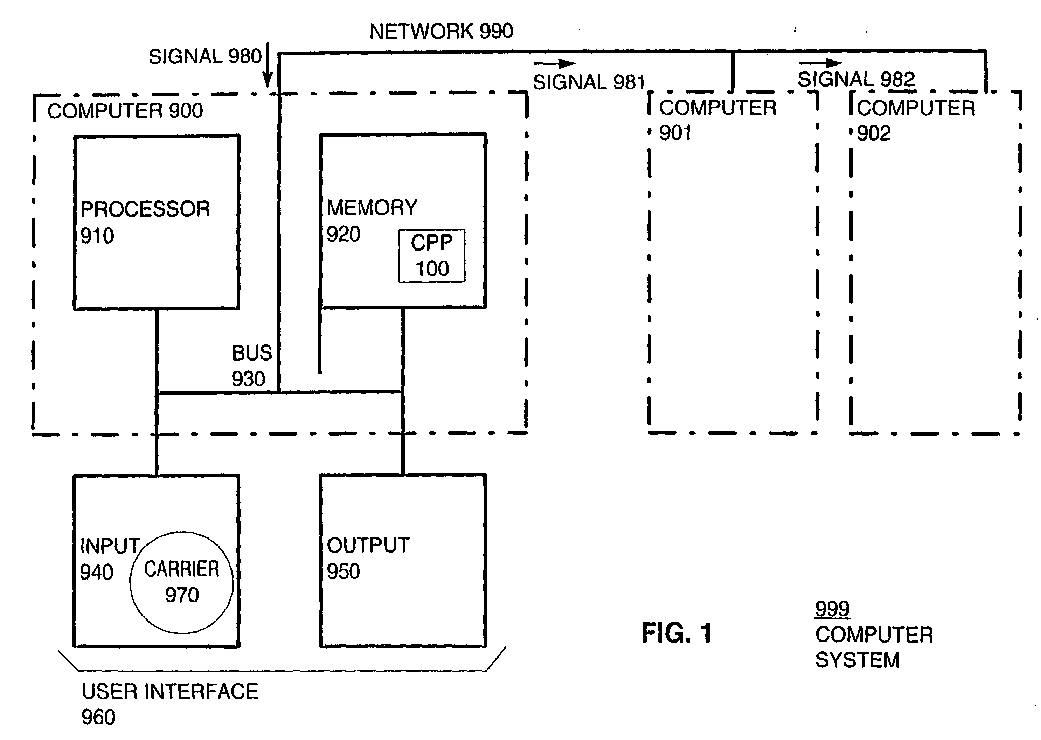

FIG. 1 zeigt ein vereinfachtes Blockschaltbild eines Computernetzsystems 999 mit einer Vielzahl von Computern (oder 90q, q=0...Q-1, Q beliebig).

Die Computer 900-902 sind über ein Netzwerk 990 verbunden. Der Computer 900 umfaßt einen Prozessor 910, einen Speicher 920, einen Bus 930 und wahlweise eine Eingabevorrichtung 940 und eine Ausgabevorrichtung 950 (Ein- und Ausgabevorrichtung ergeben die Benutzerschnittstelle 960). Die Erfindung liegt als Computerprogrammprodukt (CPP) 100 (oder 10q, wobei q=0...Q-1, Q beliebig), als Programmträger 970 und als Programmsignal 980 vor. Diese Komponenten werden im folgenden als Programm bezeichnet.

Die Elemente 100 und 910-980 des Computers 900 verallgemeinern die entsprechenden Elemente 10q und 91q-98q (gezeigt für q=0 im Computer 90q).

Der Computer 900 ist beispielsweise ein konventioneller Personalcomputer (PC), ein Multiprozessorcomputer, eine Mainframecomputer, eine tragbarer oder ein stationärer PC oder dergleichen.

Der Prozessor 910 ist beispielsweise ein Zentralprozessor (CPU), ein Mikrocontroller (MCU), oder ein digitaler Signalprozessor (DSP).

Der Speicher 920 symbolisiert Elemente, die Daten und Befehle entweder zeitweilig oder dauerhaft speichern. Obwohl zum besseren Verständnis der Speicher 920 als Teil des Computers 900 gezeigt ist, kann die Speicherfunktion im Netzwerk 990 auch an anderer Stelle implementiert werden, beispielsweise in den Computern 901/902 oder im Prozessor 910 selbst (z.B. Cache, Register). Der Speicher 920 kann ein Read-Only-Memory (ROM), ein Random-Access-Memory (RAM) oder ein Speicher mit anderen Zugriffsoptionen sein. Der Speicher 920 wird physisch auf einem computerlesbaren Programmträger implementiert, zum Beispiel auf:
(a) einem magnetischen Träger (Festplatte, Diskette, Magnetband);
(b) einem optischen Träger (CD-ROM, DVD);
(c) einem Halbleiterträger (DRAM, SRAM, EPROM, EEPROM); oder auf einem beliebig anderem Medium (z.B. Papier).
   Wahlweise ist der Speicher 920 über verschiedene Medien verteilt. Teile des Speichers 920 können fest oder austauschbar angebracht sein. Zum Lesen und Schreiben benutzt der Computer 900 bekannte Mittel wie Diskettenlaufwerke oder Bandlaufwerke.

Der Speicher 920 speichert Unterstützungskomponenten wie zum Beispiel ein Bios (Basic Input Output System), ein Betriebssystem (OS), eine Programmbibliothek, einen Compiler, einen Interpreter oder ein Textverarbeitungsprogramm. Unterstützungskomponenten sind kommerziell verfügbar und können auf dem Computer 900 von Fachleuten installiert werden. Zum besseren Verständnis sind diese Komponenten nicht dargestellt.

CPP 100 umfaßt Programminstruktionen und wahlweise Daten, die den Prozessor 910 unter anderem dazu veranlassen, die Verfahrensschritte 430-450 der vorliegenden Erfindung auszuführen. Die Verfahrensschritte werden später im Detail erläutert. Mit anderen Worten, das Computerprogramm 100 definiert die Funktion des Computers 900 und dessen Interaktion mit dem Netzwerksystem 999. Ohne hier eine Einschränkung zu beabsichtigen, CPP 100 kann beispielsweise als Quellcode in einer beliebigen Programmiersprache und als Binärcode in kompilierter Form vorliegen. Der Fachmann ist in der Lage, CPP 100 in Verbindung mit jeder der zuvor erläuterten Unterstützungskomponente (z.B. Compiler, Interpreter, Betriebssystem) zu benutzen.

Obwohl CPP 100 als im Speicher 920 gespeichert dargestellt ist, kann CPP 100 aber auch an beliebig anderer Stelle gespeichert sein. CPP 100 kann ebenfalls auf dem Programmträger 970 gespeichert sein.

Der Programmträger 970 ist außerhalb des Computers 900 dargestellt. Um CPP 100 auf den Computer 900 zu übertragen, kann der Träger 970 in das Eingabegerät 940 eingeführt werden. Der Träger 970 ist als ein beliebiger, computerlesbarer Träger implementiert, wie zum Beispiel als eines der zuvor erläuterten Medien (vgl. Speicher 920). Im allgemeinen ist der Träger 970 ein Erzeugnis, das ein computerlesbares Medium enthält, auf dem computerlesbare Programmcodemittel hinterlegt sind, die zur Ausführung des das Verfahren der vorliegenden Erfindung dienen. Des weiteren kann das Programmsignal 980 ebenfalls CPP 100 beinhalten. Das Signal 980 wird über das Netzwerk 990 zum Computer 900 übertragen.

Die ausführliche Beschreibung von CPP 100, Träger 970 und Signal 980 ist anzuwenden auf die Programmträger 971/972 (nicht gezeigt), auf das Programmsignal 981/982, sowie auf das Computerprogrammprodukt (CPP) 101/102 (nicht gezeigt), welches vom Prozessor 911/912 (nicht gezeigt) im Computer 901/902 ausgeführt wird.

Die Eingabevorrichtung 940 steht für eine Vorrichtung, die Daten und Anweisungen zur Verarbeitung durch den Computer 900 bereitstellt. Beispielsweise ist die Eingabevorrichtung 940 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion handelt, kann die Vorrichtung 940 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik). Die Eingabevorrichtung 940 kann ebenfalls zum Lesen des Trägers 970 verwendet werden.

Die Ausgabevorrichtung 950 steht für eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 940 kommuniziert die Ausgabevorrichtung 950 mit dem Benutzer, aber sie kann ebenfalls mit anderen Computern kommunizieren.

Die Eingabevorrichtung 940 und die Ausgabevorrichtung 950 können in einer einzigen Vorrichtung kombiniert werden. Beide Vorrichtungen 940, 950 können wahlweise bereitgestellt werden.

Der Bus 930 und das Netzwerk 990 stellen logische und physische Verbindungen dar, die sowohl Befehle als auch Datensignale übertragen. Verbindungen innerhalb des Computers 900 werden üblicherweise als Bus 930 bezeichnet, Verbindungen zwischen den Computern 900-902 werden als Netzwerk 990 bezeichnet. Die Vorrichtungen 940 und 950 sind mit dem Computer 900 durch den Bus 930 (wie gezeigt) verbunden oder wahlweise über das Netzwerk 990 angeschlossen. Die Signale innerhalb des Computers 900 sind überwiegend elektrische Signale, wohingegen die Signale im Netzwerk elektrische, magnetische und optische Signale oder auch drahtlose Funksignale sein können.

Netzwerkumgebungen (wie Netzwerk 990) sind in Büros, unternehmensweiten Computernetzwerken, Intranets und im Internet (d.h. World Wide Web) üblich. Die physische Entfernung zwischen den Computern im Netzwerk ist ohne Bedeutung. Netzwerk 990 kann ein drahtloses oder ein verdrahtetes Netzwerk sein. Als mögliche Beispiele für Implementierungen des Netzwerks 990 seien hier angeführt: ein lokales Netzwerk (LAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung.

Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language) usw.

Schnittstellen zum Koppeln der einzelnen Komponenten sind. ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter oder eine Soundkarte sein.

Computer und Programm sind eng verbunden. In der Beschreibung sind Wendungen wie "der Computer stellt zur Verfügung" und "das Programm stellt zur Verfügung" übliche Abkürzungen, die programmgesteuerte Verfahrensschritte des Computers beschreiben.

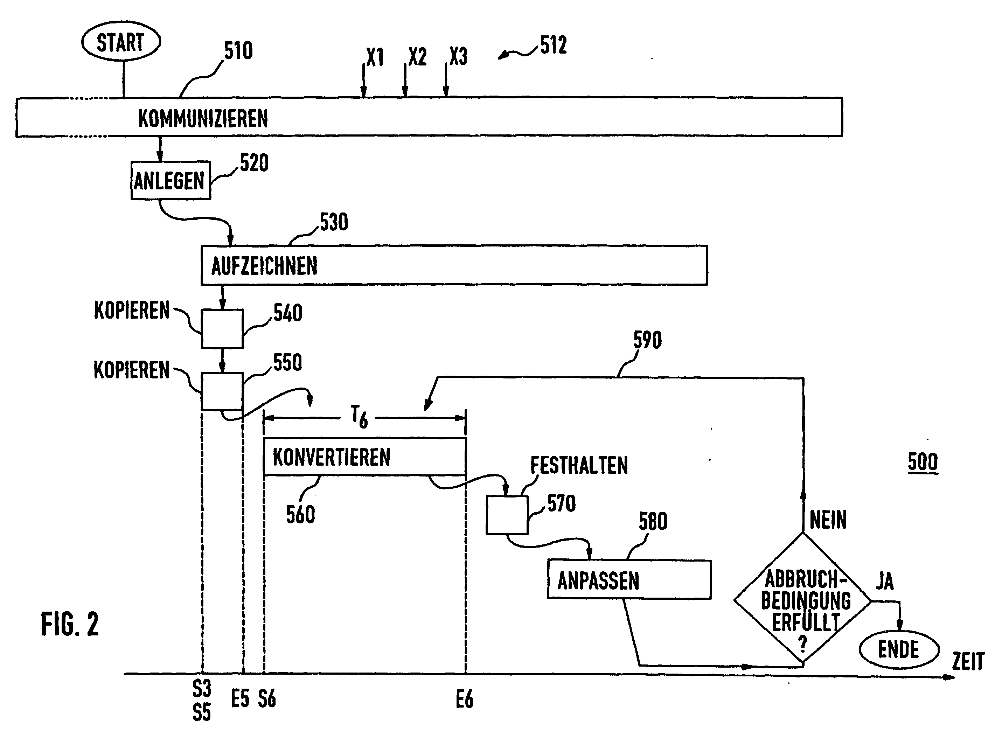

FIG. 2 zeigt das vereinfachte Flußdiagramm des erfindungsgemäßen Verfahrens 500 in einem ersten Ausführungsbeispiel. Das Verfahren 500 enthält die folgenden Verfahrensschritte: Kommunizieren 510 ("communicating"), Anlegen 520 ("creating"), Aufzeichnen 530 ("recording"), Kopieren 540 und 550 ("copying"), Konvertieren 560 ("converting"), Festhalten 570 (wahlweise, "keeping"), Anpassen 580 ("adjusting"), sowie Wiederholen 590 (wahlweise, "repeating").

Zur Veranschaulichung wird horizontal eine Zeitachse angegeben: Startzeitpunkte Sn, Endzeitpunkte En und Zeitintervalle Tn folgen der Numerierung der Bezugszeichen 5n0. Zum Beispiel beginnt Konvertieren 560 bei S6, dauert T6 und endet bei E6. In der folgenden Beschreibung gelten vereinbarungsgemäß die Zeichen ">" für "später als", "<" für "früher als" und "=" für "im wesentlichen gleichzeitig". Vertikal übereinander dargestellte Verfahrensschritte werden bvzw gleichzeitig ausgeführt.

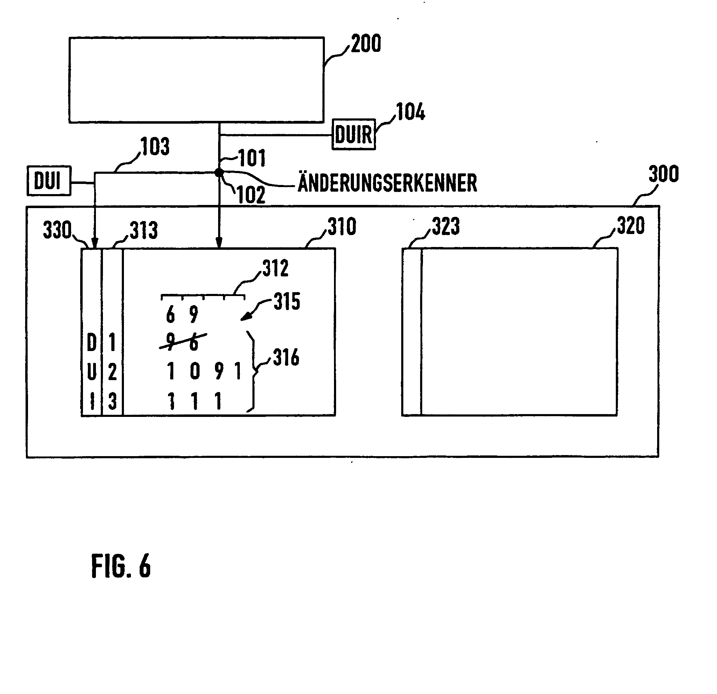

Die Referenznummer 512 bezeichnet Kommunikation 510, bei der (zu den Zeitpunkten X1 > S3, X2 > S3, X3 > S3) eine Quelltabelle 310 (vgl. FIG. 6) modifiziert wird. Die Schritte 520, 540 und 550 benötigen Ausführungszeiten T2, T4, T5, die üblicherweise weit unter den Ausführungszeiten T1, T3, und T6 der anderen Schritte 510, 530 und 560 liegen. Vorteilhaft ist das Ausführen der Schritte 530-590 während das Kommunizieren 510 im wesentlichen unverändert fortgesetzt werden kann. Die Beschreibung des Verfahrens 500 erfolgt nach der nun folgenden Beschreibung der Funktionsgruppen.

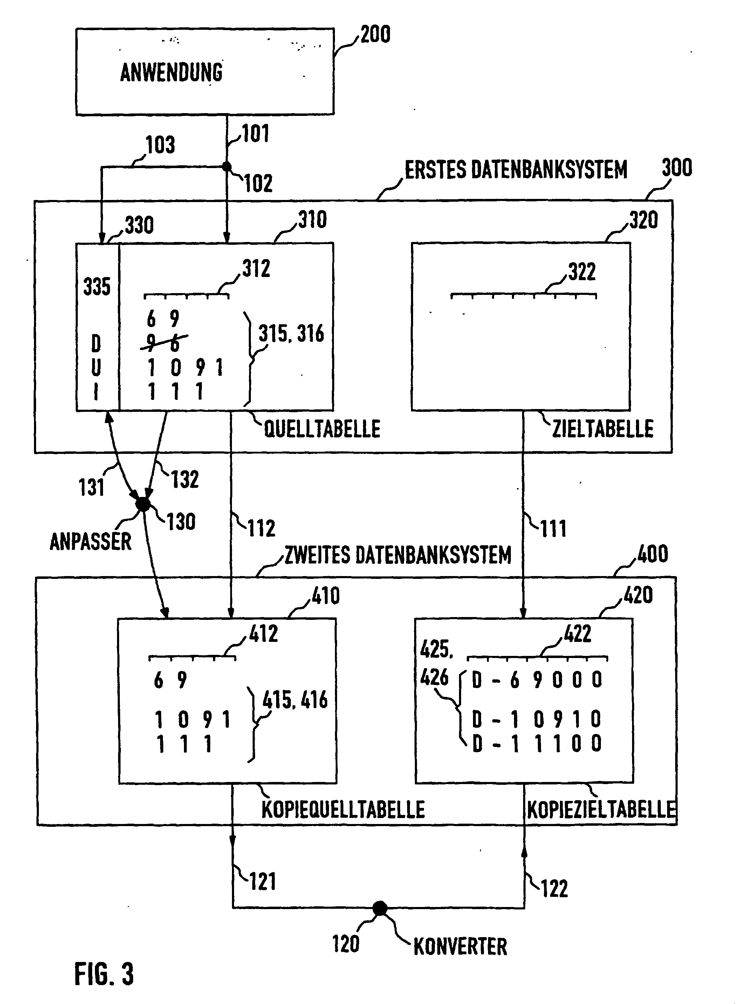

FIG. 3 zeigt ein vereinfachtes Blockdiagramm der Funktionsgruppen, die das Verfahren nach FIG. 2 ausführen: Anwendungsprogramm 200 (im folgenden: Anwendung 200, "application"), erstes Datenbanksystem 300, zweites Datenbanksystem 400 ("database systems"), sowie Computerprogrammprodukt (CPP) 100 (vgl. FIG. 1) mit Komponenten ("components") 101-133.

In einem bevorzugten Ausführungsbeispiel werden die Funktionsgruppen wie folgt implementiert: Anwendung 200 von Computer 900 (mit Prozessor 910), Datenbanksystem 300 von Computer 901, sowie Datenbanksystem 400 von Computer 902.

Zur Vereinfachung wird auf die Darstellung des Netzwerkes 990 verzichtet. Die dem Fachmann vertrauten Datenbanksysteme 300 und 400 enthalten Betriebssysteme und Speichereinheiten.

Erfindungsgemäß werden beim Ausführen des Verfahrens 500 einige Funktionsgruppen neu gebildet; ein Vorhandensein vor Ausführung ist nicht notwendig.

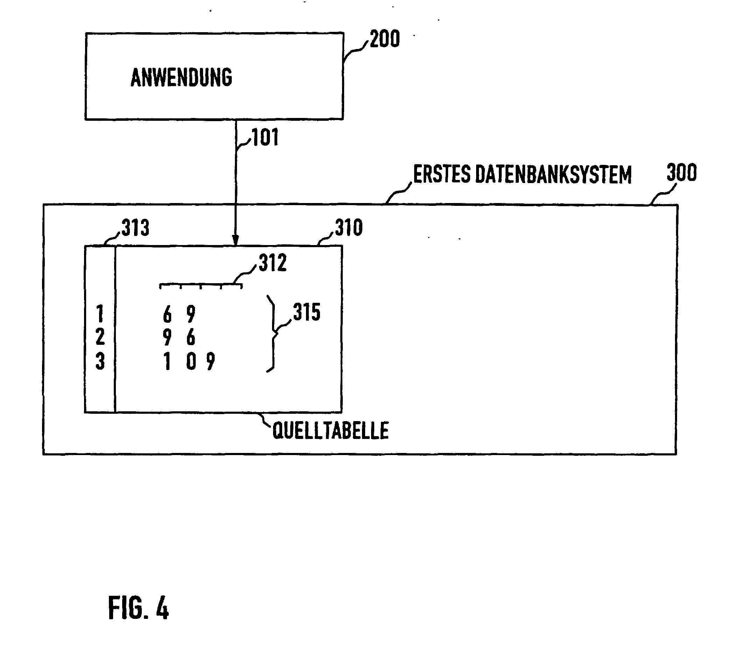

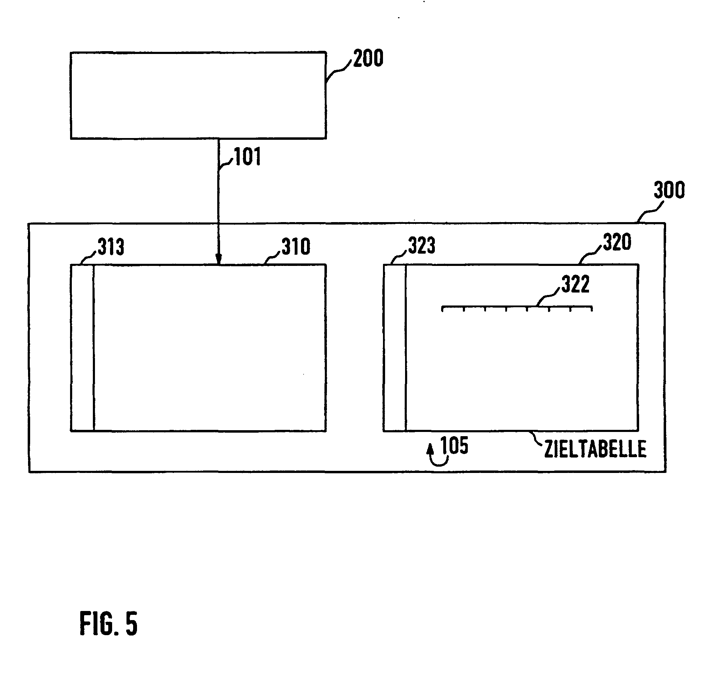

Im ersten Datenbanksystem 300 enthält die Quelltabelle 310 ("source table") die Einträge 315 (d.h. Datensätze, "entries") und die geänderten Einträge 316, die alle in einer ersten Datenstruktur 312 gespeichert sind (FIGS. 4, 6). Im weiteren enthält das erste Datenbanksystem 300 eine Zieltabelle 320 ("target table", auch: Schattentabelle) mit einer zweiten Datenstruktur 322 (FIG. 5). Das erste Datenbanksystem 300 enthält auch eine Aufzeichnung 330 zum Speichern der Änderungsarten 335 (Änderungstypen, FIG. 6), die die Änderungen in der Quelltabelle 310 beschreiben.

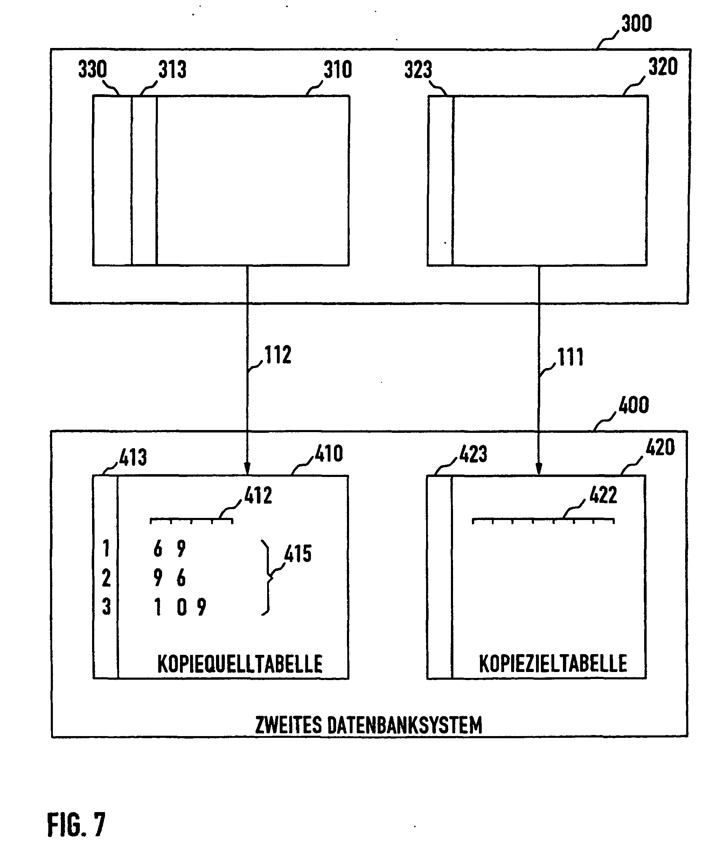

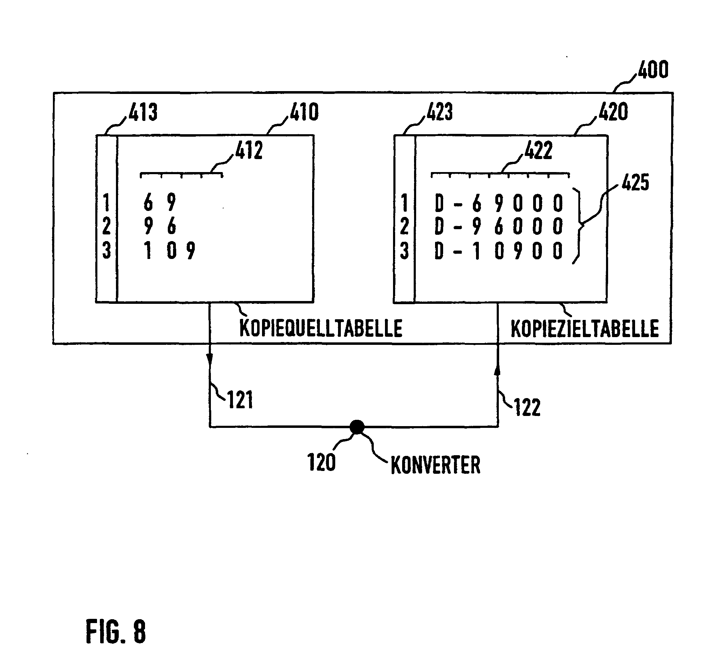

Das zweite Datenbanksystem 400 enthält eine Kopie der Quelltabelle 410 (Kopiequelltabelle 410) und eine Kopie der Zieltabelle 420 (Kopiezieltabelle 420), mit erster 412 bzw. zweiter 422 Datenstruktur (FIG. 7). Die Kopiequelltabelle 410 hat Einträge 415 und geänderte Einträge 416; die Kopiezieltabelle 420 hat Einträge 425 und geänderte Einträge 426 (FIG. 8).

Bei Ausführung des Verfahrens 500 werden Tabelleneinträge aus der Quelltabelle 310 inhaltlich unverändert umstrukturiert in die Kopie der Zieltabelle 420 übertragen und stehen dann der Anwendung 200 (oder auch einer veränderten Anwendung) zur Verfügung.

Beide Datenbanksysteme 300 und 400 können von gleichem Typ und von gleicher Version sein. Die beiden Datenstrukturen werden durch externe Kommandos und die Datenbanksysteme definiert.

Der Fachmann ist aufgrund der Beschreibung in der Lage, das Verfahren 500 auch auf mehrere Tabellen anzupassen, zum Beispiel durch Parallelverarbeitung.

Erfindungsgemäß vorgesehene Mittel zum Ausführen des Verfahrens (kollektiv als CPP 100 bezeichnet) werden als Programmanweisungen für einen Prozessor kodiert. Es ist zum Ausführen der vorliegenden Erfindung unerheblich, ob diese Mittel vom gleichen oder von verschiedenen Prozessoren ausgeführt werden. Bvzw werden die Mittel vom gleichen Prozessor 910 im Computer 900 ausgeführt, der auch die Anwendung 200 ausführt.

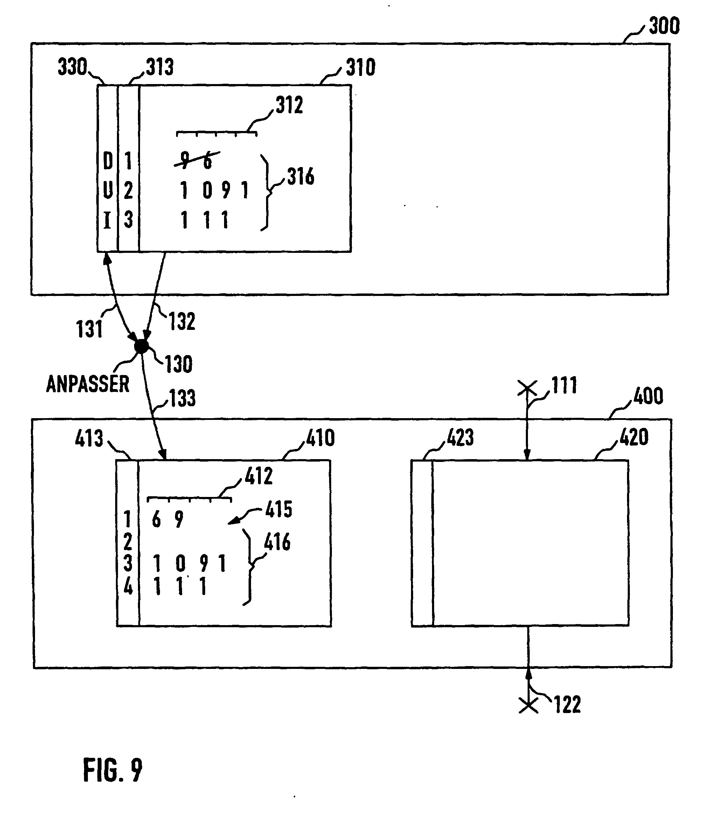

Im Ausführungsbeispiel sind als Mittel vorgesehen: Tabellenanleger 105 ("table creator"), Datenpfad 101 Anwendung zu Quelltabelle, FIGS. 4-5), Änderungserkenner 102 (FIG. 6), Datenpfad 103 (Änderungserkenner zu Aufzeichnung), Datenpfad 111 (Zieltabelle zu Kopiequelltabelle, FIG. 7), Datenpfad 112 (Quelltabelle zu Kopiequelltabelle, FIG. 7), Konverter 120 ("converter", FIG. 8), Datenpfad 121 (Kopiequelltabelle zu Konverter, FIG. 8), Datenpfad 122 (Konverter zu Kopiezieltabelle, FIG. 8), Anpasser 130 ("adjuster", FIG. 9), Datenpfad 131 (Aufzeichnung zu Anpasser, FIG. 9), Datenpfad 131 (Quelltabelle zu Anpasser, FIG. 9), sowie Datenpfad 132 (Anpasser zu Kopiequelltabelle, FIG. 9).

Die Datenpfade ("data paths") dienen zum Übertragen von Daten. Der Fachmann ist in der Lage, im Netzwerk Signale bereitzustellen, die die Daten den Pfaden entsprechend transportieren. Die Datenpfade werden üblicherweise durch Prozessoranweisungen aktiviert, diese Anweisungen beinhalten üblicherweise Steueranweisungen für Datenbanksysteme 300 und 400 wie SQL-Befehle ("structured query language"). Andere Implementierungsmöglichkeiten sind beispielsweise: Split-Mirror-Technik sowie Export-Import-Anweisungen. Die Split-Mirror-Technik ist erläutert in einer Reihe von Publikationen, u.a. in "Siegfried Schmidt: 'SAP R/3 Storage Management, Split Mirror Backup Recovery on IBM's Enterprise Storage Server (ESS), SAP Aktiengesellschaft 1999". Der Fachmann ist in der Lage, die beschriebenen Techniken anzuwenden.

Das Verfahren 500 zum Ändern der Datenstruktur, mit der im Computersystem 999 die Anwendung 200 auf Datenbanksysteme zugreift, ist durch die Ausführung der folgenden Schritte gekennzeichnet:
Kommunizieren 510 (mittels Datenpfad 101) der Anwendung 200 mit dem ersten Datenbanksystem 300 zum Speichern von Einträgen 315 in der Quelltabelle 310, welche die erste Datenstruktur 312 aufweist;

Anlegen 520, (mittels Tabellenanleger 105) der Zieltabelle 320 im ersten Datenbanksystem 300, wobei die Zieltabelle 320 die zweite Datenstruktur 322 aufweist, die von der ersten Datenstruktur 312 verschieden ist;

Aufzeichnen 530 (mittels Änderungserkenner 102 und Datenpfad 103) der Änderungsart 335 derjenigen Einträge 316 der Quelltabelle 310, die beim Kommunizieren 510 der Anwendung 200 mit der Quelltabelle 310 geändert werden (vgl. 512);

Kopieren 540 (mittels Datenpfad 111) der Zieltabelle 320 auf die Kopiezieltabelle 420 im zweiten Datenbanksystem 400, wobei die zweite Datenstruktur 322, 422 in der Kopiezieltabelle 420 beibehalten wird;

Kopieren 550 (mittels Datenpfad 112) der Quelltabelle 310 mit ihren Einträgen 315, 316 auf eine Kopiequelltabelle 410 im zweiten Datenbanksystem 400, wobei die erste Datenstruktur 312, 412 in der Kopiequelltabelle 410 beibehalten wird;

Konvertieren 560 (mittels Konverter 120 und Datenpfaden 121, 122) der Einträge 415 der Kopiequelltabelle 410 von der ersten Datenstruktur 412 in die zweite Datenstruktur 422, wobei die konvertierten Einträge 425 in der Kopiezieltabelle 420 gespeichert werden; und

Anpassen 580 (mittels Anpasser 130 und Datenpfaden 131, 132) der geänderten Einträge 316 der Quelltabelle 310 an die Kopiequelltabelle 410, wobei die geänderten Einträge 316 aus der Quelltabelle 310 als geänderte Einträge 416 in die Kopiequelltabelle 410 kopiert werden.

FIGS. 4-10 zeigen vereinfachte Blockdiagramme der Funktionsgruppen. Die Darstellung folgt dem erfindungsgemäßen Verfahren: zur Verdeutlichung der Einzelheiten sind deshalb jeweils nur die Funktionsgruppen dargestellt, die am beschriebenen Verfahrensschritt beteiligt sind.

FIGS. 4-10 verwenden Datenstrukturen am Beispiel für Postleitzahlen. Die erste Datenstruktur 312, 412 definiert maximal 4 Ziffern, von denen mindestens 2 Ziffern belegt sind (z.B. '69'); die zweite Datenstruktur 322, 422 definiert 7 alphanumerischen Zeichen, die alle belegt sind (z.B. 'D-69000'). Zur Identifizierung jedes einzelnen Tabelleneintrags 315, 316, 415, 416, 425, 426 wird tabellenübergreifend jedem Eintrag beispielsweise ein Schlüssel ("key") zugeordnet. Dazu ist der Fachmann in der Lage, ohne daß es weiterer Erläuterungen bedarf. In FIGS. 4-10 sind die Tabellen 310, 320, 410 und 420 dargestellt mit Schlüsselspalten 313, 323, 413 und 423. Die Schlüssel selbst sind mit Ziffern 1, 2, 3 und 4 bezeichnet. Bezugszeichen und Schlüssel identifizieren jeden einzelnen Eintrag. In der Beschreibung wird gegebenenfalls der Schlüssel an das Bezugszeichen gehängt: so zum Beispiel in der Beschreibung der FIG. 6 für Eintrag 316-2 mit Inhalt '1091'.

Die kleine Anzahl der Schlüssel dient zur Vereinfachung der Darstellung. Vorteilhaft ist das erfindungsgemäße Verfahren anwendbar bei Tabellen mit mehr Einträgen.

FIG. 4 zeigt das Kommunizieren 510, bei dem die Anwendung 200 die Einträge 315 ('69', '96', und '109') in der Quelltabelle 310 (mit Datenstruktur 312) speichert. Die Anwendung 200 bestimmt, welche Einträge 315 gespeichert werden; der umgekehrte Fall des Lesens von Einträgen aus der Quelltabelle 310 in die Anwendung 200 ist nicht wesentlich für die Erfindung und wird deshalb hier nicht betrachtet. Der Datenpfad 101 von der Anwendung 200 zur Quelltabelle 310 ist üblicherweise in Datenverarbeitungssystemen bereits vorhanden und kann unverändert übernommen werden. Wie eingangs erwähnt, erfolgt das Kommunizieren 510 üblicherweise über einen langen Zeitraum, in dem Anwendung 300 oder das Datenbanksystem 300 nicht modifiziert werden. Lediglich die Daten werden modifiziert.
FIG. 5 zeigt das Anlegen 520 der Zieltabelle 320. Tabellenanleger 105 ist das Mittel hierzu. Die Zieltabelle 320 speichert bvzw keine Einträge. Die zweite Datenstruktur 322 (für beispielsweise 7 alphanumerische Zeichen) wird aber bereits festgelegt. Das Anlegen 520 wird parallel ausgeführt zum Kommunizieren 510. Die Anwendung 200 kommuniziert weiterhin mit dem Datenbanksystem 300. Während des Anlegens 520 bleibt der Datenpfad 101 unverändert. Der Tabellenanlager 105 wird beispielsweise implementiert mit dem SQL-Befehl "create table zieltabelle_320 (postleitzahl varchar(7))".
FIG. 6 zeigt das Aufzeichnen 530, das parallel zum Kommunizieren 510 durchgeführt wird. Bekanntlich veranlaßt die Anwendung 200 beim Kommunizieren 510 Lese- und Schreibzugriffe auf die Quelltabelle 310, indem die Anwendung 200 über Pfad 101 Anweisungen 104 an das Datenbanksystem 300 verschickt. In FIG. 6 werden diese Anweisungen 104 mit den Buchstaben D ("delete"), U ("update"), I ("insert") und R ("read") bezeichnet. Der Änderungserkenner 102 leitet Änderungsarten 335 jener Anweisungen 104, die Schreibezugriffe veranlassen (z.B. nur D, U, I, nicht R), über Datenpfad 103 an die Aufzeichnung 330 weiter. Der Änderungserkenner 102 kann mit einem dem Fachmann bekannten Datenbanktrigger realisiert werden.

Einträge in der Quelltabelle 310, die durch das Kommunizieren 510 nach S3 (Beginn des Aufzeichnens 530) geändert werden (vgl. 512), werden mit 316 bezeichnet. Die Änderungsarten 335 werden dem Schlüssel der geänderten Einträge 316 zugeordnet. Üblicherweise hat jeder geänderte Eintrag 316 eine Änderungsart 335. Im Zusammenhang mit der vorliegenden Beschreibung werden die Änderungsarten 335 mit Buchstaben abgekürzt. Änderungsarten 335 sind beispielsweise D ("delete") für Einträge, die aus der Quelltabelle 310 gelöscht werden (z.B. '96' bei Schlüssel 2); U ("update") für Einträge, die in der Quelltabelle 310 modifiziert werden (z.B. '109' auf '1091' bei Schlüssel 3); I ("insert") für Einträge, die neu in die Quelltabelle 310 hinzukommen (z.B. Eintrag 316-4 '111' bei Schlüssel 4). Im Beispiel wird die Schlüsselspalte 313 sowohl für die Quelltabelle 310 als auch für die Aufzeichnung 330 verwendet.

Der Fachmann ist in der Lage, Alternativen auszuführen: (a) von der Quelltabelle 310 getrennte Aufzeichnungen jeweils für D, U und I, (b) eine von der Quelltabelle 310 getrennte Aufzeichnung für D, U und I mit Angabe der Schlüssel ("log table") usw. Wie in FIG. 6 gezeigt, erzeugt das Aufzeichnen 530 die Aufzeichnung 330 bvzw im erstem Datenbanksystem 300.

Für die Änderungsart U kann der Änderungserkenner 102 beispielsweise mit den folgenden SQL-Befehlen realisiert werden: "create trigger änderungserkenner_102, before update of einträge_315 in quelltabelle_310 on quelltabelle_310 begin ... (Änderungsart auf U setzen) ... end".

FIG. 7 zeigt das Kopieren 540, wobei über den Datenpfad 111 die Zieltabelle 320 in das zweite Datenbanksystem 400 als Kopiezieltabelle 420 kopiert wird. Das Kopieren 540 schließt sich bvzw unmittelbar an den Beginn des Aufzeichnen 530, und das Kopieren 540 erfolgt bvzw parallel zum Kopieren 550. Da in der Zieltabelle 320 keine Einträge vorhanden sind, erfolgt lediglich das Kopieren der Struktur: die zweite Datenstruktur 322, 422 wird beibehalten. Im Beispiel ist die Kopiezieltabelle 420 zum Aufnehmen von Einträgen mit 7 alphanumerischen Zeichen bereit.

FIG. 7 zeigt auch das Kopieren 550, wobei über den Datenpfad 112 die Quelltabelle 310 in das zweite Datenbanksystem 400 als Kopiequelltabelle 410 kopiert wird. Einträge 315-1 '69', 315-2 '96', und 315-3 '109' (vgl. FIG. 6) werden unverändert als Einträge 415-1, 415-2 bzw. 415-3 übernommen. Da sich das Kopieren 550 bvzw unmittelbar an den Beginn des Aufzeichnens 530 anschließt (d.h. S5 = S3), würden eventuelle Änderungen in der Quelltabelle 310 während des Kopierens in Aufzeichnung 330 bereits erfaßt. Die erste Datenstruktur 312, 412 wird beibehalten. Da im Beispiel Änderungen in der Quelltabelle 310 erst nach dem Zeitpunkt E5 (also nach dem Kopieren 550) erfolgen, werden Einträge 316 (vgl. FIG. 6) noch nicht in die Kopiequelltabelle 410 übernommen. Mit anderen Worten, die geänderten Einträge 316 sind während (T5) des Kopierens 550 noch nicht vorhanden. Es ist ein Vorteil der Erfindung, daß diese Einträge 316 in späteren Verfahrensschritten berücksichtigt werden.

Für das Kopieren 540 und 550 eignet sich die bekannte Split-Mirror-Technik, die während der Kopierens Lese- und Schreibzugriffe auf die zu kopierende Tabelle zuläßt. Vorteilhaft ermöglicht diese Technik das Kommunizieren 510 zur gleichen Zeit.

FIG. 8 zeigt das Konvertieren 560 der Einträge 415 der Kopiequelltabelle 410 von der ersten Datenstruktur 412 in die zweite Datenstruktur 422, wobei die konvertierten Einträge 425 in der Kopiezieltabelle 420 gespeichert werden. Das Konvertieren 560 erfolgt über Datenpfad 121, Konverter 120 und Datenpfad 122. Das Konvertieren 560 erfolgt innerhalb des zweiten Datenbanksystems 400.

Der Datenpfad 121 übergibt die Einträge 415 an den Konverter 120; der Konverter 120 konvertiert die Einträge 415 in die zweite Datenstruktur 422 nach einer vorherbestimmten Regel (z.B. Buchstabe mit Bindestrich anhängen, mit Nullen auffüllen), und der Datenpfad übergibt die konvertierten Einträge 425 an die Kopiezieltabelle 420. Das Konvertieren 560 benötigt üblicherweise einen Zeitraum T6, bei dem Stillstandszeiten der Anwendung 200 wirtschaftlich nicht zu vertreten wäre. Es ist ein Vorteil der vorliegenden Erfindung, daß das Konvertieren 560 ohne Unterbrechung der Kommunikation 510 ausgeführt werden kann.

FIG. 9 zeigt den zusätzlichen Schritt Festhalten 570 der Kopiezieltabelle 420, ausgeführt im Anschluß an Konvertieren 560. Dabei wird das Schreiben auf die Kopiezieltabelle 420 über den Datenpfad 111 sowie das Lesen von der Kopiezieltabelle 420 über den Datenpfad 122 vermieden. Mit anderen Worten, die Datenpfade 111 und 122 sind deaktiviert.

FIG. 9 zeigt das Anpassen 580 der geänderten Einträge 316 der Quelltabelle 310 an die Kopiequelltabelle 410. Die geänderten Einträge 316 aus der Quelltabelle 310 (vgl. FIG. 6 '96' gelöscht, '1091' sowie '111') werden als geänderte Einträge 416 in die Kopiequelltabelle 410 kopiert. Dabei werden in der Kopiequelltabelle 410 durchgeführt: Löschungen (D, '96' bei Schlüssel 2), Modifikationen (U, '1091' bei Schlüssel 3) und Ergänzungen (I, '111' bei Schlüssel 4).

Bvzw wird dabei die Aufzeichnung 330 berücksichtigt, die über den Datenpfad 131 an den Anpasser 130 übergeben wird (2D, 3U, 4I). Der Anpasser 130 wertet die Aufzeichnung 330 aus und leitet die geänderten Einträge 316 über die Datenpfade 132 und 133 weiter. Wie durch den Doppelpfeil in Pfad 131 angedeutet, veranlaßt der Anpasser 130 wahlweise eine Änderung der Aufzeichnung 330 (FIG. 7) für bereits übergeleitete Einträge. Bvzw werden bereits berücksichtigte Änderungsarten 335 gelöscht oder deaktiviert.

Wahlweise können beim Anpassen 580 zur Vereinfachung des Verfahrens alle Einträge 315, 316 auf 415, 416 kopiert werden. Das ist aber nicht notwendig.

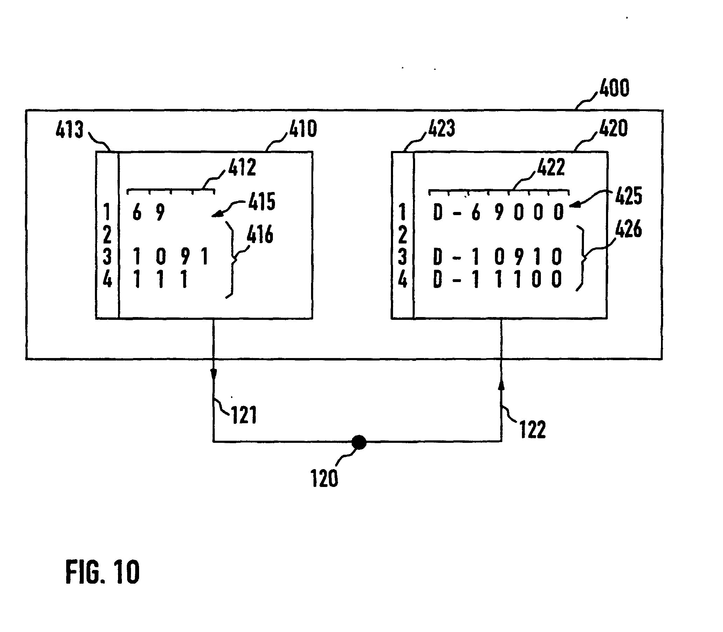

FIG. 10 zeigt, wie durch die zyklische Wiederholung 590 der Schritte Konvertieren 560 und Anpassen 580 die geänderten Einträge 416 aus der Kopiequelltabelle 410 als Einträge 426 in die Kopiezieltabelle übernommen werden. Im Beispiel: der Eintrag 425-1 ('D-69000' bei Schlüssel 1) bleibt unverändert, der Eintrag 425-2 ('D-96000', vgl. FIG. 8) wurde gelöscht, der Eintrag 426-3 ('D-10910') wurde geändert, und der Eintrag 426-4 ('D-11100') wurde hinzugefügt.

Die Wiederholung 590 wird abgebrochen sobald eine der folgenden Bedingungen erfüllt ist:
(a) Die Zahl der geänderten Einträge 316 in der Quelltabelle 310 hat eine vorgegebene Anzahl unterschritten.
(b) Die vom Prozessor 910 zur Ausführung der Schritte Konvertieren 560 und Anpassen 580 benötigte Zeit unterschreitet einen vorgegebenen Grenzwert.
(c) Es werden Änderungen im Datenbanksystem 300 erforderlich, die nicht mit Verfahren 500 in Verbindung stehen, bei denen aber die Ausführung der Anwendung 200 ohnehin unterbrochen werden muß.
Wahlweise können die Schritte Kopieren 540 und 550 in die Wiederholung 590 einbezogen werden, wobei das Kopieren für Teilbereiche der Tabellen vorteilhaft ist. Diese Teilbereiche werden vorteilhafterweise durch die Aufzeichnung 330 bestimmt.

Es ist vorteilhaft, daß bei Ausführung des Verfahrens 500 das Kommunizieren 510 zwischen Anwendung 200 und erstem Datenbanksystem 300 im wesentlichen ununterbrochen fortgesetzt wird. Dabei ist es möglich, daß die Anwendung 200 weitere Einträge 316 in die Quelltabelle 310 schreibt. Nach Ausführung des Verfahrens wird die Kommunikation kurzzeitig unterbrochen, um diese weiteren geänderten Einträge 316 auf die Kopiezieltabelle 420 zu übertagen. Der Fachmann bedient sich dabei beispielsweise der Elemente Anpasser 130, Konverter 120 und der dazugehörigen Datenpfade.

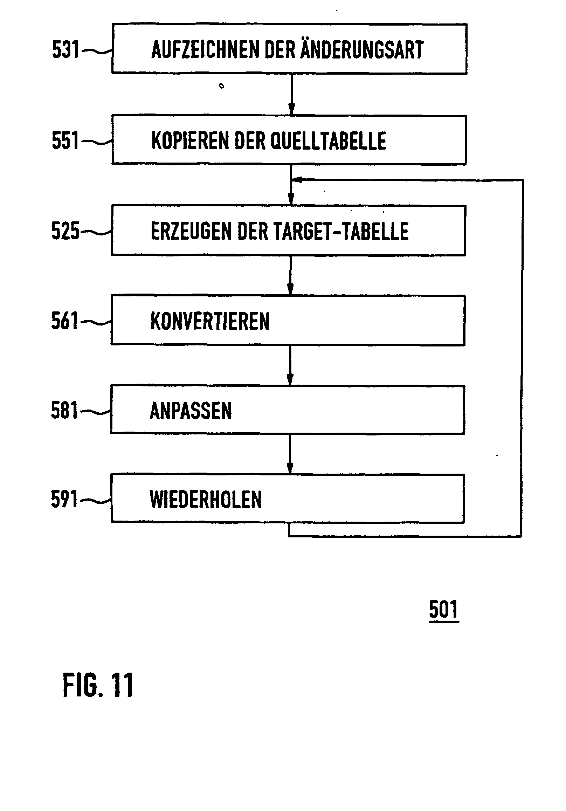

FIG. 11 zeigt das vereinfachte Flußdiagramm des erfindungsgemäßen Verfahrens 501 in einem zweiten Ausführungsbeispiel. Die Beschreibung der FIGS. 1-10 trifft auch auf das Verfahren 501 zu. Das Verfahren 501 ist abgeleitet aus dem Verfahren 500; in beiden Verfahren sind die Schritte Kommunizieren 510/511, Aufzeichnen 530/531, Kopieren 550/551, Konvertieren 560/561, Anpassen 580/581 und Wiederholen 590/591 gleich; die Schritte Anlegen 520 und Kopieren 540 des Verfahrens 500 werden zum Schritt Erzeugen 525 des Verfahrens 501 kombiniert. Im ersten Datenbanksystem 300 wird keine Zieltabelle mehr erstellt, es wird auch keine Zieltabelle mehr kopiert, sondern es wird direkt eine Target-Tabelle 420 im zweiten Datenbanksystem 400 angelegt. Die Target-Tabelle 420 im Verfahren 501 entspricht der Kopiezieltabelle 420 im Verfahren 500. Das Verfahren hat die folgenden Verfahrensschritte:

Während das Anwendungsprogramm 200 mit dem ersten Datenbanksystem 300 zum Speichern von Einträgen 315 in der Quelltabelle 310 (erste Datenstruktur 312) kommuniziert 511 (mittels Datenpfad 101), erfolgt Aufzeichnen 531 (mittels Änderungserkenner 102 und 103) der Änderungsart 335 derjenigen Einträge 316, die geändert werden;

Kopieren 551 (mittels Datenpfad 112) der Quelltabelle 310 mit ihren Einträgen 315, 316 auf die Kopiequelltabelle 410 in dem zweiten Datenbanksystem 400, wobei die erste Datenstruktur 312, 412 in der Kopie der Quelltabelle 410 beibehalten wird;

Erzeugen 525 (mittels Tabellenerzeuger, nicht dargestellt da analog zu Anleger 105) der Target-Tabelle 420 in dem zweiten Datenbanksystem 400, wobei die Target-Tabelle 420 die zweite Datenstruktur 422 aufweist, die von der ersten Datenstruktur 312 verschieden ist;

Konvertieren 561 (mittels Konverter 120 und Datenpfaden 121, 122) der Einträge 415 der Kopiequelltabelle 410 von der ersten Datenstruktur 412 in die zweite Datenstruktur 422, wobei die konvertierten Einträge 425 in der Target-Tabelle 420 gespeichert werden;

Anpassen 581 (mittels Anpasser 130 und Datenpfaden 131, 132) der geänderten Einträge 316 der Quelltabelle 310 an die Kopie der Quelltabelle 410, wobei die geänderten Einträge 316 aus der Quelltabelle 310 als geänderte Einträge 416 in die Kopiequelltabelle 410 kopiert werden; und

Wiederholen 591 der Schritte Konvertieren 561 und Anpassen 581 (Abbrechen unter den oben beschriebenen Bedingungen).

Zusammenfassend für beide Ausführungsbeispiele 500/501 wird die vorliegende Erfindung beschrieben als Computersystem 900 zum Ändern der Datenstruktur, mit der im Computersystem 999 das Anwendungsprogramm 200 auf Datenbanksysteme 300, 400 zugreift. Das Computersystem 900 ist gekennzeichnet durch:
einen ersten Datenpfad 101 als Mittel zum Kommunizieren 510, 511 des Anwendungsprogramms 200 mit dem ersten Datenbanksystem 300 zum Speichern von Einträgen 315 in der Quelltabelle 310, die die erste Datenstruktur 312 aufweist;
einen Tabellenanleger 105 als Mittel zum Anlegen 520 der Zieltabelle 320 (erstes Ausführungsbeispiel) im ersten Datenbanksystem 300 (Zieltabelle 320 mit Datenstruktur 322, die von Datenstruktur 312 verschieden ist) bzw. als Mittel zum Erzeugen 525 der Target-Tabelle 420;
einen Änderungserkenner 102 sowie zweiten und dritten Datenpfaden 102, 103 als Mittel zum Aufzeichnen 530/531 der Änderungsart 335 derjenigen Einträge 316 der Quelltabelle 310, die beim Kommunizieren 510/511 der Anwendung 200 mit der Quelltabelle 310 geändert werden;
einen vierten Datenpfad 111 als Mittel zum Kopieren 540 der Zieltabelle 320 auf die Kopiezieltabelle 420 im zweiten Datenbanksystem 400, wobei die zweite Datenstruktur 322, 422 in der Kopiezieltabelle 420 beibehalten wird (nur erstens Ausführungsbeispiel 500);
einen fünften Datenpfad 112 als Mittel zum Kopieren 550/551 der Quelltabelle 310 mit ihren Einträgen 315, 316 auf die Kopiequelltabelle 410 im zweiten Datenbanksystem 400, wobei die erste Datenstruktur 312, 412 in der Kopiequelltabelle 410 beibehalten wird;
einen Konverter 120 sowie sechste und siebente Datenpfade 121, 122 als Mittel zum Konvertieren 560/561 der Einträge 415 der Kopiequelltabelle 410 von der ersten Datenstruktur 412 in die zweite Datenstruktur 422, wobei die konvertierten Einträge 425 in der Kopiezieltabelle 420 (erstes Beispiel) bzw. in der Target-Tabelle 420 (zweites Beispiel) gespeichert werden; und
einen Anpasser 130 sowie achte und neunte Datenpfade 131, 132 als Mittel zum Anpassen 580/581 der geänderten Einträge 316 der Quelltabelle 310 an die Kopiequelltabelle 410, wobei die geänderten Einträge 316 aus der Quelltabelle 310 als geänderte Einträge 416 in die Kopiequelltabelle 410 kopiert werden.

Zusammenfassend für beide Ausführungsbeispiele 500/501 wird die vorliegende Erfindung beschrieben als Computerprogrammprodukt 100 zum Ändern der Datenstruktur mit der im Computersystem 999 das Anwendungsprogramm 200 auf Datenbanksysteme 300, 400 zugreift. Das Computerprogrammprodukt 100 hat Prozessorbefehlen und ist gekennzeichnet durch:

Prozessorbefehle zum Kommunizieren 510/511, 101 des Anwendungsprogramms 200 mit dem ersten Datenbanksystem 300 zum Speichern von Einträgen 315 in der Quelltabelle 310, die eine erste Datenstruktur 312 aufweist;

Prozessorbefehle zum Anlegen 520, 105 der Zieltabelle 320 im ersten Datenbanksystem 300, wobei die Zieltabelle 320 eine zweite Datenstruktur 322 aufweist, die von der ersten Datenstruktur 312 verschieden ist (erstes Beispiel 500) bzw. altenativ Prozessorbefehle zum Erzeugen 525 der Target-Tabelle 420 im zweiten Datenbanksystem 400, wobei die Target-Tabelle 420 eine zweite Datenstruktur 422 aufweist, die von der ersten Datenstruktur 312, 412 verschieden ist (zweites Beispiel 501);

Prozessorbefehle zum Aufzeichnen 530/531, 102, 103 der Änderungsart 335 derjenigen Einträge 316 der Quelltabelle 310, die beim Kommunizieren 510, 511, 101 des Anwendungsprogramms 200 mit der Quelltabelle 310 geändert werden 512;

Prozessorbefehle zum Kopieren 540, 111 der Zieltabelle 320 auf die Kopiezieltabelle 420 im zweiten Datenbanksystem 400, wobei die zweite Datenstruktur 322, 422 in der Kopie der Zieltabelle 420 beibehalten wird (erstes Beispiel);

Prozessorbefehle zum Kopieren 550/551, 112 der Quelltabelle 310 mit ihren Einträgen 315, 316 auf die Kopiequelltabelle 410 im zweiten Datenbanksystem 400, wobei die erste Datenstruktur 312, 412 in der Kopiequelltabelle 410 beibehalten wird;

Prozessorbefehle zum Konvertieren 560/561, 120, 121, 122 der Einträge 415 der Kopiequelltabelle 410 von der ersten Datenstruktur 412 in die zweite Datenstruktur 422, wobei die konvertierten Einträge 425 in der Kopie der Zieltabelle 420 (bzw. Target-Tabelle 420) gespeichert werden; und

Prozessorbefehle zum Anpassen 580/581, 130, 131, 132 der geänderten Einträge 316 der Quelltabelle 310 an die Kopiequelltabelle 410, wobei die geänderten Einträge 316 aus der Quelltabelle 310 als geänderte Einträge 416 in die Kopie der Quelltabelle 410 kopiert werden.

Der Fachmann ist in der Lage, die vorliegende Erfindung zu modifizieren, ohne sich von deren Umfang zu entfernen.

### Liste der Referenzzeichen

| Zeichen | Element |
|---|---|
| 100 | Computerprogrammprodukt (CPP) |
| 101 | Datenpfad von Anwendung zu Quelltabelle |
| 102 | Änderungserkenner |
| 103 | Datenpfad von Änderungserkenner zu Aufzeichnung |
| 104 | Anweisungen |
| 105 | Tabellenanleger |
| 111 | Datenpfad von Zieltabelle zu Kopiequelltabelle |
| 112 | Datenpfad von Quelltabelle zu Kopiequelltabelle |
| 120 | Konverter |
| 121 | Datenpfad von Kopiequelltabelle zu Konverter |
| 122 | Datenpfad von Konverter zu Kopiezieltabelle |
| 130 | Anpasser |
| 131 | Datenpfad von Aufzeichnung zu Anpasser |
| 131 | Datenpfad von Quelltabelle zu Anpasser |
| 132 | Datenpfad von Anpasser zu Kopiequelltabelle |
| 200 | Anwendung |
| 300 | erstes Datenbanksystem |
| 310 | Quelltabelle |
| 312, 412 | erste Datenstruktur |
| 313, 323 | Schlüsselspalte |
| 315 | Einträge in Quelltabelle |
| 316 | geänderte Einträge in Quelltabelle |
| 320 | Zieltabelle |
| 322, 422 | zweite Datenstruktur |
| 330 | Aufzeichnung |
| 335 | Änderungsarten |
| 400 | zweites Datenbanksystem |
| 410 | Kopiequelltabelle |
| 413, 423 | Schlüsselspalte |
| 415 | Einträge in Kopiequelltabelle |
| 416 | geänderte Einträge in Kopiequelltabelle |
| 420 | Kopiezieltabelle (Target-Tabelle) |
| 425 | Einträge in Kopiezieltabelle |
| 426 | geänderte Einträge in Kopiezieltabelle |
| 500, 501 | Verfahren |
| 510, 511 | Kommunizieren |
| 512 | Kommunikation |
| 520 | Anlegen |
| 525 | Erzeugen |
| 530, 531 | Aufzeichnen |
| 540 | Kopieren |
| 550, 551 | Kopieren |
| 560, 561 | Konvertieren |
| 570 | Festhalten |
| 580, 581 | Anpassen |
| 590, 591 | Wiederholen |
| 910 | Prozessor |
| 920 | Speicher |
| 930 | Bus |
| 940 | Eingabevorrichtung |
| 950 | Ausgabevorrichtung |
| 960 | Benutzerschnittstelle |
| 970 | Programmträger |
| 980 | Programmsignal |
| 990 | Netzwerk |

## Patentansprüche

1. Verfahren (500) zum Ändern der Datenstruktur mit der in einem Computersystem (999) ein Anwendungsprogramm (200) auf Datenbanksysteme (300, 400) zugreift, das Verfahren (500) **gekennzeichnet durch** die folgenden computer-implementierten Verfahrensschritte:
Kommunizieren (510, 101) des Anwendungsprogramms (200) mit einem ersten Datenbanksystem (300) zum Speichern von Einträgen (315) in einer Quelltabelle (310), die eine erste Datenstruktur (312) aufweist;
Anlegen (520, 105) einer Zieltabelle (320) in dem ersten Datenbanksystem (300), wobei die Zieltabelle (320) eine zweite Datenstruktur (322) aufweist, die von der ersten Datenstruktur (312) verschieden ist;
Aufzeichnen (530, 102, 103) der Änderungsart (335) derjenigen Einträge (316) der Quelltabelle (310), die beim Kommunizieren (510, 101) des Anwendungsprogramms (200) mit der Quelltabelle (310) geändert werden (511);
Kopieren (540, 111) der Zieltabelle (320) auf eine Kopie der Zieltabelle (420) in einem zweiten Datenbanksystem (400), wobei die zweite Datenstruktur (322, 422) in der Kopie der Zieltabelle (420) beibehalten wird;
Kopieren (550, 112) der Quelltabelle (310) mit ihren Einträgen (315, 316) auf eine Kopie der Quelltabelle (410) in dem zweiten Datenbanksystem (400), wobei die erste Datenstruktur (312, 412) in der Kopie der Quelltabelle (410) beibehalten wird;
Konvertieren (560, 120, 121, 122) der Einträge (415) der Kopie der Quelltabelle (410) von der ersten Datenstruktur (412) in die zweite Datenstruktur (422), wobei die konvertierten Einträge (425) in der Kopie der Zieltabelle (420) gespeichert werden; und
Anpassen (580, 130, 131, 132) der geänderten Einträge (316) der Quelltabelle (310) an die Kopie der Quelltabelle (410), wobei die geänderten Einträge (316) aus der Quelltabelle (310) als geänderte Einträge (416) in die Kopie der Quelltabelle (410) kopiert werden.

2. Verfahren (500) nach Anspruch 1, **gekennzeichnet durch** das kontinuierliche Ausführen des Schritts Kommunizieren (510) und die zyklische Wiederholung (590) der Schritte Konvertieren (560) und Anpassen (580).

3. Verfahren (500) nach Anspruch 2, **gekennzeichnet durch** den Abbruch der Wiederholung unter zumindest einer der folgenden Bedingungen:
(a) die Zahl der geänderten Einträge (316) in der Quelltabelle (310) hat eine vorgegebene Anzahl unterschritten;
(b) die zur Ausführung der Schritte Konvertieren (560) und Anpassen (580) benötigte Zeit unterschreitet einen vorgegebenen Grenzwert.

4. Verfahren nach Anspruch 3, **gekennzeichnet durch** das Einbeziehen der Schritte Kopieren (540, 550) in die Wiederholung (590).

5. Verfahren nach Anspruch 1, **gekennzeichnet durch** den zusätzlichen Schritt Festhalten (570) der Kopie der Zieltabelle (420), ausgeführt im Anschluß an den Schritt Konvertieren (560).

6. Verfahren nach Anspruch 1, wobei im Schritt Aufzeichnen (530) eine Aufzeichnung (330) im erstem Datenbanksystem (300) erzeugt wird.

7. Computersystem (900) zum Ändern der Datenstruktur mit der in einem Computersystem (999) ein Anwendungsprogramm (200) auf Datenbanksysteme (300, 400) zugreift, das Computersystem (900) **gekennzeichnet durch**:
einen ersten Datenpfad (101) als Mittel zum Kommunizieren (510) des Anwendungsprogramms 200 mit einem ersten Datenbanksystem (300) zum Speichern von Einträgen (315) in einer Quelltabelle (310), die eine erste Datenstruktur (312) aufweist;
einen Tabellenanleger (105) als Mittel zum Anlegen (520) einer Zieltabelle (320) in dem ersten Datenbanksystem (300), wobei die Zieltabelle (320) eine zweite Datenstruktur (322) aufweist, die von der ersten Datenstruktur (312) verschieden ist;
einen Änderungserkenner (102) sowie zweiten und dritten Datenpfaden (102, 103) als Mittel zum Aufzeichnen (530) der Änderungsart (335) derjenigen Einträge (316) der Quelltabelle (310), die beim Kommunizieren (510) der Anwendung (200) mit der Quelltabelle (310) geändert werden;
einen vierten Datenpfad (111) als Mittel zum Kopieren (540) der Zieltabelle (320) auf eine Kopie der Zieltabelle (420) in dem zweiten Datenbanksystem (400), wobei die zweite Datenstruktur (322, 422) in der Kopie der Zieltabelle (420) beibehalten wird;
einen fünften Datenpfad (112) als Mittel zum Kopieren (550) der Quelltabelle (310) mit ihren Einträgen (315, 316) auf eine Kopie der Quelltabelle (410) in einem zweiten Datenbanksystem (400), wobei die erste Datenstruktur (312, 412) in der Kopie der Quelltabelle (410) beibehalten wird;
einen Konverter (120) sowie sechste und siebente Datenpfade (121, 122) als Mittel zum Konvertieren (560) der Einträge (415) der Kopie der Quelltabelle (410) von der ersten Datenstruktur (412) in die zweite Datenstruktur (422), wobei die konvertierten Einträge (425) in der Kopie der Zieltabelle (420) gespeichert werden; und
einen Anpasser (130) sowie achte und neunte Datenpfade (131, 132) als Mittel zum Anpassen (580) der geänderten Einträge (316) der Quelltabelle (310) an die Kopie der Quelltabelle (410), wobei die geänderten Einträge (316) aus der Quelltabelle (310) als geänderte Einträge (416) in die Kopie der Quelltabelle (410) kopiert werden.

8. Computerprogrammprodukt (100) zum Ändern der Datenstruktur, mit der in einem Computersystem (999) ein Anwendungsprogramm (200) auf Datenbanksysteme (300, 400) zugreift, das Computerprogrammprodukt (100) mit Prozessorbefehlen, **gekennzeichnet durch**:
Prozessorbefehle zum Kommunizieren (510, 101) des Anwendungsprogramms (200) mit einem ersten Datenbanksystem (300) zum Speichern von Einträgen (315) in einer Quelltabelle (310), die eine erste Datenstruktur (312) aufweist;
Prozessorbefehle zum Anlegen (520, 105) einer Zieltabelle (320) in dem ersten Datenbanksystem (300), wobei die Zieltabelle (320) eine zweite Datenstruktur (322) aufweist, die von der ersten Datenstruktur (312) verschieden ist;
Prozessorbefehle zum Aufzeichnen (530, 102, 103) der Änderungsart (335) derjenigen Einträge (316) der Quelltabelle (310), die beim Kommunizieren (510, 101) des Anwendungsprogramms (200) mit der Quelltabelle (310) geändert werden (512);
Prozessorbefehle zum Kopieren (540, 111) der Zieltabelle (320) auf eine Kopie der Zieltabelle (420) in einem zweiten Datenbanksystem (400), wobei die zweite Datenstruktur (322, 422) in der Kopie der Zieltabelle (420) beibehalten wird;
Prozessorbefehle zum Kopieren (550, 112) der Quelltabelle (310) mit ihren Einträgen (315, 316) auf eine Kopie der Quelltabelle (410) in dem zweiten Datenbanksystem (400), wobei die erste Datenstruktur (312, 412) in der Kopie der Quelltabelle (410) beibehalten wird;
Prozessorbefehle zum Konvertieren (560, 120, 121, 122) der Einträge (415) der Kopie der Quelltabelle (410) von der ersten Datenstruktur (412) in die zweite Datenstruktur (422), wobei die konvertierten Einträge (425) in der Kopie der Zieltabelle (420) gespeichert werden; und
Prozessorbefehle zum Anpassen (580, 130, 131, 132) der geänderten Einträge (316) der Quelltabelle (310) an die Kopie der Quelltabelle (410), wobei die geänderten Einträge (316) aus der Quelltabelle (310) als geänderte Einträge (416) in die Kopie der Quelltabelle (410) kopiert werden.

9. Verfahren (501) zum Ändern der Datenstruktur mit der in einem Computersystem (999) ein Anwendungsprogramm (200) auf Datenbanksysteme (300, 400) zugreift, das Verfahren (501) **gekennzeichnet durch** die folgenden computer-implementierten Verfahrensschritte:
während das Anwendungsprogramm (200) mit einem ersten Datenbanksystem (300) zum Speichern von Einträgen (315) in einer Quelltabelle (310), die eine erste Datenstruktur (312) aufweist, kommuniziert (511, 101), Aufzeichnen (531, 102, 103) der Änderungsart (335) derjenigen Einträge (316), die geändert werden;
Kopieren (551, 112) der Quelltabelle (310) mit ihren Einträgen (315, 316) auf eine Kopie der Quelltabelle (410) in dem zweiten Datenbanksystem (400), wobei die erste Datenstruktur (312, 412) in der Kopie der Quelltabelle (410) beibehalten wird;
Erzeugen (525) einer Target-Tabelle (420) in dem zweiten Datenbanksystem (400), wobei die Target-Tabelle (420) eine zweite Datenstruktur (422) aufweist, die von der ersten Datenstruktur (312) verschieden ist;
Konvertieren (561, 120, 121, 122) der Einträge (415) der Kopie der Quelltabelle (410) von der ersten Datenstruktur (412) in die zweite Datenstruktur (422), wobei die konvertierten Einträge (425) in der Target-Tabelle (420) gespeichert werden;
Anpassen (581, 130, 131, 132) der geänderten Einträge (316) der Quelltabelle (310) an die Kopie der Quelltabelle (410), wobei die geänderten Einträge (316) aus der Quelltabelle (310) als geänderte Einträge (416) in die Kopie der Quelltabelle (410) kopiert werden; und
Wiederholen (591) der Schritte Konvertieren (561) und Anpassen (581).

10. Computerprogrammprodukt (100) zum Ändern der Datenstruktur mit der in einem Computersystem (999) ein Anwendungsprogramm (200) auf Datenbanksysteme (300, 400) zugreift, das Computerprogrammprodukt (100) mit Prozessorbefehlen, die einen Prozessor zur Ausführung des Verfahrens nach Anspruch 9 veranlaßt.

## Claims

1. A method (500) for changing the data structure which an application program (200) in a computer system (999) uses to access database systems (300, 400), the method (500) **characterized by** the following computer-implemented method steps:
the application program (200) communicates (510, 101) with a first database system (300) in order to store entries (315) in a source table (310) which has a first data structure (312);
a destination table (320) is created (520, 105) in the first database system (300), the destination table (320) having a second data structure (322) which is different than the first data structure (312);
the type of change (335) is recorded (530, 102, 103) for those entries (316) in the source table (310) which are changed (511) when the application program (200) communicates (510, 101) with the source table (310); the destination table (320) is copied (540, 111) to a copy of the destination table (420) in a second database system (400), the second data structure (322, 422) being retained in the copy of the destination table (420);
the source table (310) with its entries (315, 316) is copied (550, 112) to a copy of the source table (410) in the second database system (400), the first data structure (312, 412) being retained in the copy of the source table (410) ;
the entries (415) in the copy of the source table (410) are converted (560, 120, 121, 122) from the first data structure (412) to the second data structure (422), the converted entries (425) being stored in the copy of the destination table (420); and
the changed entries (316) in the source table (310) are adjusted (580, 130, 131, 132) to the copy of the source
table (410), the changed entries (316) being copied from the source table (310) as changed entries (416) to the copy of the source table (410).

2. The method (500) as claimed in claim 1, **characterized by** the continuous execution of the communication step (510) and the cyclic repetition (590) of the conversion (560) and adjusting (580) steps.

3. The method (500) as claimed in claim 2, **characterized by** the termination of the repetition under at least one of the following conditions:
(a) the number of changed entries (316) in the source table (310) has undershot a prescribed number;
(b) the time required for executing the conversion (560) and adjusting (580) steps undershoots a prescribed limit value.

4. The method as claimed in claim 3, **characterized by** the inclusion of the copying steps (540, 550) in the repetition (590).

5. The method as claimed in claim 1, **characterized by** the additional step of keeping (570) the copy of the destination table (420), executed after the conversion step (560).

6. The method as claimed in claim 1, where the recording step (530) involves generation of a recording (330) in the first database system (300).

7. A computer system (900) for changing the data structure which an application program (200) in a computer system (999) uses to access database systems (300, 400), the computer system (900) **characterized by**:
a first data path (101) as means for the application program 200 to communicate (510) with a first database system (300) in order to store entries (315) in a source table (310) which has a first data structure (312);
a table creator (105) as means for creating (520) a destination table (320) in the first database system (300), the destination table (320) having a second data structure (322) which is different than the first data structure (312);
a change identifier (102) and second and third data paths (102, 103) as means for recording (530) the type of change (335) for those entries (316) in the source table (310) which are changed when the application (200) communicates (510) with the source table (310);
a fourth data path (111) as means for copying (540) the destination table (320) to a copy of the destination table (420) in the second database system (400), the second data structure (322, 422) being retained in the copy of the destination table (420);
a fifth data path (112) as means for copying (550) the source table (310) with its entries (315, 316) to a copy of the source table (410) in a second database system (400), the first data structure (312, 412) being retained in the copy of the source table (410);
a converter (120) and sixth and seventh data paths (121, 122) as means for converting (560) the entries (415) in the copy of the source table (410) from the first data structure (412) to the second data structure (422), the converted entries (425) being stored in the copy of the destination table (420); and
an adjuster (130) and eighth and ninth data paths (131, 132) as means for adjusting (580) the changed entries (316) in the source table (310) to the copy of the source table (410), the changed entries (316) being copied from the source table (310) as changed entries (416) to the copy of the source table (410).

8. A computer program product (100) for changing the data structure which an application program (200) in a computer system (999) uses to access database systems (300, 400), the computer program product (100) having processor instructions, **characterized by**:
processor instructions for the application program (200) to communicate (510, 101) with a first database system (300) in order to store entries (315) in a source table (310) which has a first data structure (312) ;
processor instructions for creating (520, 105) a destination table (320) in the first database system (300), the destination table (320) having a second data structure (322) which is different than the first data structure (312);
processor instructions for recording (530, 102, 103) the type of change (335) for those entries (316) in the source table (310) which are changed (512) when the application program (200) communicates (510, 101) with the source table (310);
processor instructions for copying (540, 111) the destination table (320) to a copy of the destination table (420) in a second database system (400), the second data structure (322, 422) being retained in the copy of the destination table (420);
processor instructions for copying (550, 112) the source table (310) with its entries (315, 316) to a copy of the source table (410) in the second database system (400), the first data structure (312, 412) being retained in the copy of the source table (410); processor instructions for converting (560, 120, 121, 122) the entries (415) in the copy of the source table (410) from the first data structure (412) to the second data structure (422), the converted entries (425) being stored in the copy of the destination table (420); and
processor instructions for adjusting (580, 130, 131, 132) the changed entries (316) in the source table (310) to the copy of the source table (410), the changed entries (316) being copied from the source table (310) as changed entries (416) to the copy of the source table (410).

9. A method (501) for changing the data structure which an application program (200) in a computer system (999) uses to access database systems (300, 400), the method (501) **characterized by** the following computer-implemented method steps:
while the application program (200) is communicating (511, 101) with a first database system (300) in order to store entries (315) in a source table (310) which has a first data structure (312), the type of change (335) is recorded (531, 102, 103) for those entries (316) which are changed;
the source table (310) with its entries (315, 316) is copied (551, 112) to a copy of the source table (410) in the second database system (400), the first data structure (312, 412) being retained in the copy of the source table (410);
a target table (420) is generated (525) in the second database system (400), the target table (420) having a second data structure (422) which is different than the first data structure (312);
the entries (415) in the copy of the source table (410) are converted (561, 120, 121, 122) from the first data structure (412) to the second data structure (422), the converted entries (425) being stored in the target table (420) ;
the changed entries (316) in the source table (310) are adjusted (581, 130, 131, 132) to the copy of the source table (410), the changed entries (316) being copied from the source table (310) as changed entries (416) to the copy of the source table (410); and
the conversion (561) and adjusting (581) steps are repeated (591).

10. A computer program product (100) for changing the data structure which an application program (200) in a computer system (999) uses to access database systems (300, 400), the computer program product (100) having processor instructions which prompts a processor to execute the method as claimed in claim 9.

## Revendications

1. Procédé (500) pour modifier la structure de données, à l'aide de laquelle dans un système informatique (999), un programme d'application (200) accède à des systèmes de banques de données (300, 400), le procédé (500) étant **caractérisé par** les étapes suivantes, implémentées dans l'ordinateur :
- communication (510, 101) du programme d'application (200) avec un premier système de banque de données (300), pour sauvegarder des saisies (315) dans un tableau source (310) présentant une première structure de données (312) ;
- création (520, 105) d'un tableau cible (320) dans le premier système de banque de données (300), le tableau cible (320) présentant une seconde structure de données (322) qui est différente de la première structure de données (312) ;
- enregistrement (530, 102, 103) du type de modification (335) des saisies (316) du tableau source (310), qui sont modifiées (511) lors de la communication (510, 101) du programme d'application (200) avec le tableau source (310).
- copie (540, 111) du tableau cible (320) sur une copie du tableau cible (420), dans un second système de banque de données (400), la seconde structure de données (322, 422) étant maintenue dans la copie du tableau cible (420) ;
- copie (550, 112) du tableau source (310) avec ses saisies (315, 316) sur une copie du tableau source (410), dans le second système de banque de données (400), la première structure de données (312, 412) étant maintenue dans la copie du tableau source (410) ;
- conversion (560, 120, 121, 122) des saisies (415) de la copie du tableau source (410) de la première structure de données (412) dans la seconde structure de données (422), les saisies converties (425) étant sauvegardées dans la copie du tableau cible (420) ; et
- adaptation (580, 130, 131, 132) des saisies modifiées (316) du tableau source (310) à la copie du tableau source (410), les saisies modifiées (316) étant copiées à partir du tableau source (310) en tant que saisies modifiées (416) dans la copie du tableau cible (410).

2. Procédé (500) selon la revendication 1, **caractérisé par** la réalisation continue de l'étape de communication (510) et par la répétition cyclique (590) des étapes de conversion (560) et d'adaptation (580).

3. Procédé (500) selon la revendication 2, **caractérisé par** l'annulation de la répétition sous au moins l'une des conditions suivantes :
(a) le nombre de saisies modifiées (316) dans le tableau source (310) a été inférieur à une valeur prescrite ;
(b) le temps nécessaire pour la réalisation des étapes de conversion (560) et d'adaptation (580) est inférieur à une valeur limite prédéfinie.

4. Procédé selon la revendication 3, **caractérisé par** l'implication des étapes de copie (540, 550) dans la répétition (590).

5. Procédé selon la revendication 1, **caractérisé par** l'étape supplémentaire de consignation (570) de la copie du tableau cible (420), réalisée à la suite de l'étape de conversion (560).

6. Procédé selon la revendication 1, un enregistrement (330) ayant lieu dans le premier système de banques de données (300), au cours de l'étape d'enregistrement (530).

7. Système informatique (900), pour modifier la structure de données, à l'aide de laquelle dans un système informatique (999), un programme d'application (200) accède à des systèmes de banques de données (300, 400), le système informatique étant **caractérisé par** :
- un premier chemin de données (101) en tant que moyen pour la communication (510) du programme d'application (200), avec un premier système de banques de données (300) pour sauvegarder des saisies (315) dans un tableau source (310) qui présente une première structure de données (312) ;
- un tableur (105) en tant que moyen de création (520) d'un tableau cible (320) dans le premier système de banque de données (300), le tableau cible (320) présentant une seconde structure de données (322) qui est différente de la première structure de données (312) ;
- un identificateur de modifications (102) ainsi qu'un second et un troisième chemin de données (102, 103), en tant que moyens d'enregistrement (530) du type de modification (335) des saisies (316) du tableau source (310), qui sont modifiées lors de la communication (510) de l'application (200) avec le tableau source (310) ;
- un quatrième chemin de données (111) en tant que moyen de copie (540) du tableau cible (320) sur une copie du tableau cible (420) dans le second système de banque de données (400), la seconde structure de données (322, 422) étant maintenue dans la copie du tableau cible (420) ;
- un cinquième chemin de données (112) en tant que moyen pour la copie (550) du tableau source (310) avec ses saisies (315, 316) sur une copie du tableau source (410) dans un second système de banque de données (400), la première structure de données (312, 412) étant maintenue dans la copie du tableau source (410) ;
- un convertisseur (120) ainsi qu'un sixième et un septième chemin de données (121, 122), en tant que moyens pour la conversion (560) des saisies (415) de la copie du tableau source (410) de la première structure de données (412) dans la seconde structure de données (422), les saisies converties (425) étant sauvegardées dans la copie du tableau cible (420) ; et
- un adaptateur (130) ainsi qu'un huitième et un neuvième chemin de données (131, 132), en tant que moyens d'adaptation (580) des saisies modifiées (316) du tableau source (310) à la copie du tableau source (410), les saisies modifiées (316) étant copiées à partir du tableau source (310), en tant que saisies modifiées (416) dans la copie du tableau source (410).

8. Programme informatique (100) pour modifier la structure de données, à l'aide de laquelle dans un système informatique (999), un programme d'application (200) accède à des systèmes de banques de données (300, 400), le programme informatique (100) avec des commandes au processeur, **caractérisé par**
- des commandes au processeur pour la communication (510, 101) du programme d'application (200) avec un premier système de banques de données (300) pour la sauvegarde de saisies (315) dans un tableau source (310) qui présente une première structure de données (312) ;
- des commandes au processeur pour la création (520, 105) d'un tableau cible (320) dans le premier système de banque de données (300), le tableau cible (320) présentant une seconde structure de données (322) qui est différente de la première structure de données (312) ;
- des commandes au processeur pour l'enregistrement (530, 102, 103) du type de modification (335) des saisies (316) du tableau source (310) qui sont modifiées (512) lors de la communication (510, 101) du programme d'application (200) avec le tableau source (310) ;
- des commandes au processeur pour la copie (540, 111) du tableau cible (320) sur une copie du tableau cible (420), dans un second système de banque de données (400), la seconde structure de données (322, 422) étant maintenue dans la copie du tableau cible (420) ;
- des commandes au processeur pour la copie (550, 112) du tableau source (310) avec ses saisies (315, 316) sur une copie du tableau source (410) dans le second système de banque de données (400), la première structure de données (312, 412) étant maintenue dans la copie du tableau source (410) ;
- des commandes au processeur pour la conversion (560, 120, 121, 122) des saisies (415) de la copie du tableau source (410) de la première structure de données (412) dans la seconde structure de données (422), les saisies converties (425) étant sauvegardées dans la copie du tableau cible (420) ; et
- des commandes au processeur pour l'adaptation (580, 130, 131, 132) des saisies modifiées (316) du tableau source (310) à la copie du tableau source (410), les saisies modifiées (316) étant copiées à partir du tableau source (310) en tant que saisies modifiées (416) dans la copie du tableau source (410).

9. Procédé (501) pour modifier la structure de données, à l'aide de laquelle dans un système informatique (999), un programme d'application (200) accède à des systèmes de banques de données (300, 400), le procédé (501) étant **caractérisé par** les étapes suivantes, implémentées dans l'ordinateur :
- alors que le programme d'application (200) communique (511, 101) avec un premier système de banque de données (300) pour sauvegarder des saisies (315) dans un tableau source (310) présentant une première structure de données (312), enregistrement (531, 102, 103) du type de modification (335) des saisies (316) qui sont modifiées ;
- copie (551, 112) du tableau source (310) avec ses saisies (315, 316) sur une copie du tableau source (410) dans le second système de banque de données (400), la première structure de données (312, 412) étant maintenue dans la copie du tableau source (410) ;
- génération (525) d'un tableau cible (420) dans le second système de banque de données (400), le tableau cible (420) présentant une seconde structure de données (422) qui est différente de la première structure de données (312);
- conversion (561, 120, 121, 122) des saisies (415) de la copie du tableau source (410) de la première structure de données (412) dans la seconde structure de données (422), les saisies converties (425) étant sauvegardées dans le tableau cible (420) ;
- adaptation (581, 130, 131, 132) des saisies modifiées (316) du tableau source (310) à la copie du tableau source (410), les saisies modifiées (316) étant copiées à partir du tableau source (310) en tant que saisies modifiées (416) dans la copie du tableau source (410) ; et
- répétition (591) des étapes de conversion (561) et d'adaptation (581).

10. Programme informatique (100) pour modifier la structure de données, à l'aide de laquelle dans un système informatique (999), un programme d'application (200) accède à des systèmes de banques de données (300, 400), le programme informatique (100) avec des commandes au processeur, incitant un processeur à réaliser le procédé selon la revendication 9.
